# EUROPÄISCHE PATENTSCHRIFT

(11) **EP 2 647 525 B1**
(45) Veröffentlichungstag und Bekanntmachung des Hinweises auf die Patenterteilung: **08.06.2016**
(21) Anmeldenummer: 13001264.4
(22) Anmeldetag: 13.03.2013
(51) Int. Cl.: B60P 7/08

(54) **Halter**
Bracket
Console

(30) Priorität: 02.04.2012 DE 102012006556
(43) Veröffentlichungstag der Anmeldung: 09.10.2013
(73) Patentinhaber: Huf Hülsbeck & Fürst GmbH & Co. KG, 42551 Velbert (DE)
(72) Erfinder: Geurden, Armin, 47929 Grefrath (DE); Felderhoff, Rainer, 42549 Velbert (DE)

(56) Entgegenhaltungen:
- EP-A1- 1 623 872
- DE-A1- 4 000 722
- DE-U1-202005 012 945

## Beschreibung

Die Erfindung betrifft einen Halter, insbesondere zum Verzurren von Gepäckteilen oder Kindersitzen im Kraftfahrzeug, zumindest umfassend einen Sockel, eine Öse und ein aus einem formbaren, insbesondere biegbaren, Material ausgebildetes Verstärkungselement, wobei das Verstärkungselement an dem Sockel angeordnet ist und die Öse beweglich an dem Sockel und/oder an dem Verstärkungselement gelagert ist.

Aus dem Stand der Technik ist ein Halter zum Verzurren von Gepäckteilen oder Kindersitzen im Kraftfahrzeug bekannt, welcher einen Sockel und ein Verstärkungselement umfasst. Dabei ist das aus einem geformten, insbesondere gebogenen Material ausgebildetes Verstärkungselement derart gebogen, dass die beiden Enden des Verstärkungselements sich im gebogenen Endzustand überlappen und eine zweilagige Schicht bilden. Die zweilagige Schicht des Verstärkungselements weist eine Durchgangsöffnung auf, die zur Durchführung einer Schraube dient, mit welcher der Halter an einer Oberfläche mittels einer Schrauben-Mutter-Verbindung sicher verschraubt werden kann. Die zweilagige Schicht sorgt vor allem dafür, dass der Halter sich auch bei hohen Belastungen nicht von der Oberfläche löst. Allerdings wird durch die zweilagige Schicht die Bauhöhe des Halters vergrößert. In einigen Fällen ist der Bauraum begrenzt, so dass eine Unterbringung des Halters aufweisend eine zweilagige Schicht nicht möglich ist. Aus der DE202005012945U1 ist ein Halter bekannt, welcher zum Verankern von Ladegütern in einem Kofferraum eines Kraftfahrzeugs dient. Der Halter weist einen rahmenartigen Grundkörper auf, an dem eine Verankerungsöse über eine Verbindungseinheit schwenkbar gelagert ist, wobei die Verbindungseinheit einstückig ausgebildet ist.

Weiterhin ist aus der DE 40 00 722 A1 ist ein gattungsgemässer Halter bekannt. Es ist daher die Aufgabe, einen Halter bereitzustellen, welcher einen kompakten Aufbau aufweist.

Die Aufgabe wird durch den kennzeichnenden Teil des Patentanspruchs 1 gelöst. Durch diese Maßnahme gelingt es, die Bauhöhe des Halters auf einfache Art und Weise zu reduzieren. Darüber hinaus wird durch diesen sehr kompakten Aufbau des Halters Material bei der Herstellung des Verstärkungselements eingespart, weil auf eine zweilagige Wandung, wie im Stand der Technik, verzichtet wird. Ein zusätzlicher positiver Effekt besteht darin, dass das Gewicht des Halters weiter reduziert wird.

Nach der Erfindung ist vorgesehen, dass das geformte Verstärkungselement zwei Enden aufweist, welche miteinander formschlüssig verbunden sind. Dadurch wird eine stabile Verbindung erreicht, so dass auch höhere Kräfte, welche beispielsweise beim Bremsvorgang des Kraftfahrzeugs auftreten können, auf den Halter wirken können. Eine Verformung des Verstärkungselements wird daher in vorteilhafterweise verhindert.

Nach einer weiteren bevorzugten Ausführungsform der Erfindung ist vorgesehen, dass die zwei miteinander zu verbindenden Enden an ihren Verbindungsabschnitten komplementär zueinander ausgebildet sind. Dadurch wird sichergestellt, dass die beiden Enden fest miteinander verbunden sind. Es ist vorzugsweise eine Presspassung oder eine Klemmverbindung zu wählen, bei der die beiden Enden einen stabilen, festen und sicheren Formschluss bilden. Somit wird auch bei hohen auf den Halter wirkenden Kräften bzw. Belastungen, zum Beispiel beim starken Bremsen des Kraftfahrzeugs in Gefahrensituationen, ausgeschlossen, dass sich der an einer Oberfläche befestigte Halter löst.

Die Stabilität der Verbindung wird weiter verbessert, wenn die beiden Enden mittels einer Verzahnung, insbesondere T-förmigen Verzahnung, formschlüssig miteinander verbunden sind. Die T-förmigen Verzahnung nimmt vor allem die Kräfte in x-Richtung und y-Richtung auf. Dies ist sehr vorteilhaft, weil in der Regel die größten Belastungen aus diesen Richtungen auf den Halter wirken. Zusätzlich wird in z-Richtung die Seitenwand noch von einer am Sockel angeordneten Rastnase gehalten, welche zum Verrasten des Verstärkungselements mit dem Sockel dient. Dazu kann zusätzlich eine Rastaufnahme in der T-förmigen Seitenwand angeordnet sein, um die Rastnase des Sockels aufzunehmen. Durch die Rastverbindung wird die Stabilität der T-förmigen Verzahnung weiter verbessert, da auch in z-Richtung wirkende Kräfte aufgenommen werden können.

Nach einer weiteren bevorzugten Ausführungsform der Erfindung ist vorgesehen, dass die Wandstärke des Verstärkungselements mindestens 3mm und höchstens 5mm aufweist. Dies bietet den Vorteil, dass die Halterung einerseits kompakt und andererseits auch stabil ausgebildet ist. Zusätzlich wird ausgeschlossen, dass die Halterung ein zu hohes Gewicht aufweist. Ebenfalls werden die Materialkosten für den Halter minimiert. Ferner wird bei einer Wandstärke von 3mm bis 5mm sichergestellt, dass das Verstärkungselement zuverlässigen gebogen werden kann. Ein Bruch oder Risse des Verstärkungselement beim Biegeprozess ist daher ausgeschlossen.

Nach einer bevorzugten Ausführungsform der Erfindung ist vorgesehen, dass die Wandstärke des Verstärkungselements im geformten Endzustand im Wesentlichen konstant ist. Der kastenförmige Sockel weist mindestens zwei parallel zueinander angeordnete schlitzförmige Aufnahmen für die Seitenwände des Verstärkungselements auf. Wenn die Wandstärke des Verstärkungselements konstant ist, kann die Breite der jeweiligen Schlitze des Sockels ebenfalls konstant gehalten werden. So lässt sich ein Sockel herstellen, der hinsichtlich seiner Gesamtkonstruktion in Bezug auf die y-Achse einen achsensymmetrischen Aufbau aufweist. Dadurch werden die Kosten für die Herstellung des Werkzeugs für den Sockel verringert.

Eine einfache Montage des Halters an einer Oberfläche wird gewährleistet, wenn eine Bodenwand oder eine Seitenwand des Verstärkungselements und/oder eine Bodenwand oder eine Seitenwand des Sockels jeweils mindestens eine Durchgangsöffnung, vorzugsweise zwei Durchgangsöffnungen, aufweisen, welche zum Befestigen des Halters an einer Oberfläche dient, wobei die Durchgangsöffnung des Sockels und die Durchgangsöffnung des Verstärkungselements fluchtend zueinander angeordnet sind.

Nach einer bevorzugten Ausführungsform der Erfindung ist vorgesehen, dass das Verstärkungselement teilkastenförmig ausgebildet ist und die Seitenwand des Verstärkungselements zumindest teilweise durch die beiden Enden des Verstärkungselements im geformten Endzustand ausgebildet ist. Der Vorteil besteht darin, dass sich durch die teilkastenförmige Ausbildung des Verstärkungselements die Seitenwände sich bei einer Krafteinwirkung gegenseitig abstützen. Ebenfalls wird durch die teilkastenfömige Ausgestaltung des Verstärkungselements die Montage vereinfacht, weil das Verstärkungselement für einen Werker handlicher ausgestaltet ist.

Sehr einfach und kostengünstig ist der konstruktive Aufbau des Halters, wenn das Verstärkungselement teilkastenförmig ausgebildet ist und die Bodenwand des Verstärkungselements zumindest teilweise durch die beiden Enden des Verstärkungselements im geformten Endzustand ausgebildet ist.

Die Sicherheit und Stabilität des Halters wird weiter verbessert, wenn die beiden die Bodenwand bildenden Enden des Verstärkungselements jeweils eine Durchgangsöffnung zur Aufnahme von Befestigungselementen aufweisen.

Sehr kostengünstig und stabil ist der konstruktive Aufbau des Halters, wenn der Sockel aus Kunststoff ausgebildet ist und das Verstärkungselement aus Metall, ausgebildet ist. Der Fertigungsprozess, insbesondere das Biegen des Verstärkungselements wird deutlich erleichtert, wenn Metall, vorzugsweise Edelstahl verwendet wird. Der Sockel dient im Wesentlichen zur Aufnahme des Verstärkungselements und hat die Aufgabe das Verstärkungselement abzudecken, so dass dieses für den Benutzer im Wesentlichen versteckt angeordnet wird. Dazu reicht es aus, den Sockel aus einem kostengünstigen Kunststoff auszubilden. Man könnte auch den Kunststoff des Sockels mit Glasfasern verstärken, um dessen Festigkeit weiter zu erhöhen, wenn die Umstände dies erfordern. Das Verstärkungselement, wie auch die Öse, sind aus einem Metall ausgebildet, welches hohe Kräfte aufnehmen kann.

Die Erfindung wird mit Hilfe von drei Ausführungsbeispielen beschrieben. Es zeigen:
- Figur 1: einen erfindungsgemäßen Halter in einer perspektivischen Darstellung gemäß einer ersten Ausführungsform,
- Figur 2: den Halter in einer perspektivischen Darstellung von oben gemäß der ersten Ausführungsform,
- Figur 3: den Halter in einer Draufsicht von oben gemäß der ersten Ausführungsform,
- Figur 4: den Halter in einer perspektivischen Darstellung von unten gemäß der ersten Ausführungsform,
- Figur 5: den Halter in einer Seitenansicht von hinten gemäß der ersten Ausführungsform,
- Figur 6: den Halter in einer perspektivischen Darstellung von unten gemäß einer zweiten Ausführungsform, und
- Figur 7: den Halter in einer perspektivischen Darstellung von unten gemäß einer dritten Ausführungsform.

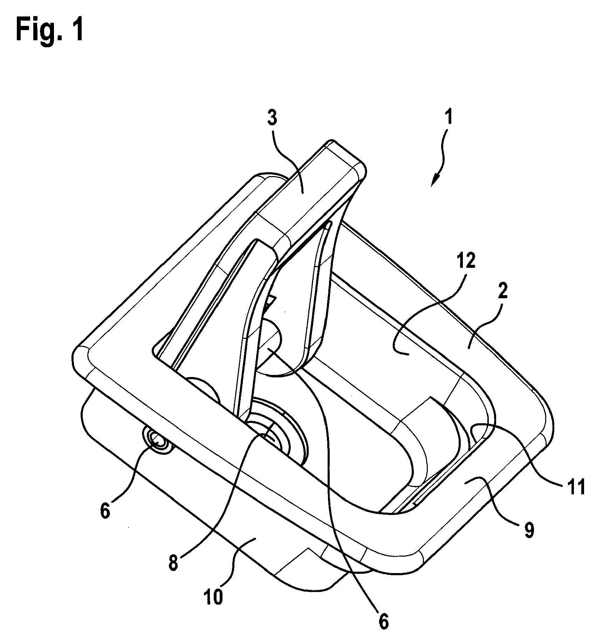

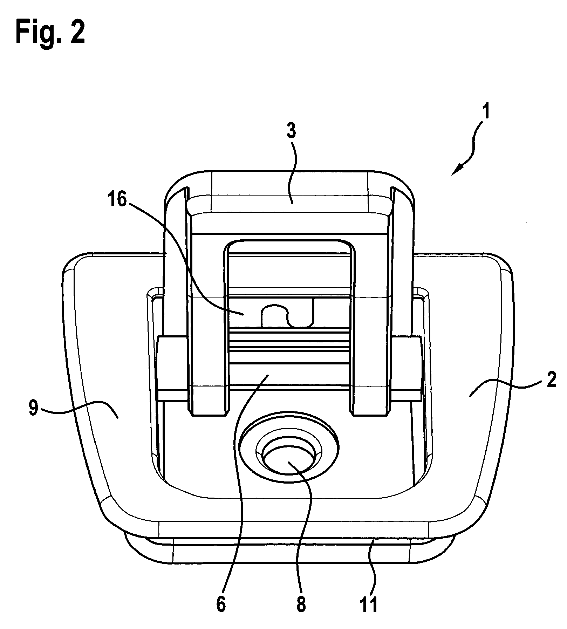

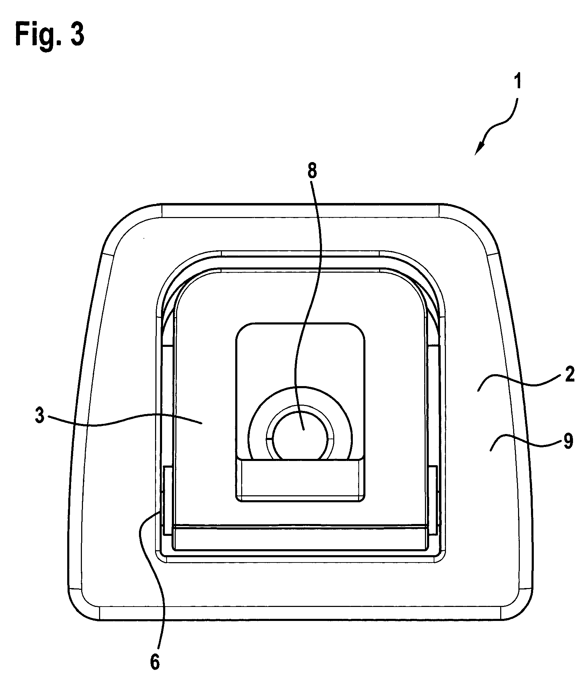

In den Figuren 1 bis 5 ist ein Halter 1 gemäß einer ersten Ausführungsform gezeigt, welcher zum Verzurren von Gepäckteilen im Kofferraum eines Kraftfahrzeuges oder zum Verzurren von Kindersitzen geeignet ist. Der Halter 1 umfasst einen aus Kunststoff ausgebildeten Sockel 2, eine aus Metall ausgebildete Öse 3, insbesondere Verzurröse, und ein aus einem formbaren, insbesondere biegbaren Material ausgebildetes Verstärkungselement 4 aus Metall. Das als Verstärkungseinsatz ausgebildete Verstärkungselement 4 ist an dem Sockel 2 angeordnet. Dabei ist das Verstärkungselement 4 formschlüssig mittels einer Keilverbindung und einer Rastverbindung mit dem Sockel 2 verbunden. Hierzu wird das Verstärkungselement 4 in eine schlitzförmige Aufnahme 5 des Sockels 2 eingeschoben und mittels der Keilverbindung und/oder Rastverbindung fixiert. Das Verstärkungselement 4 könnte alternativ auch stoffschlüssig oder kraftschlüssig mit dem Sockel 2 verbunden werden.

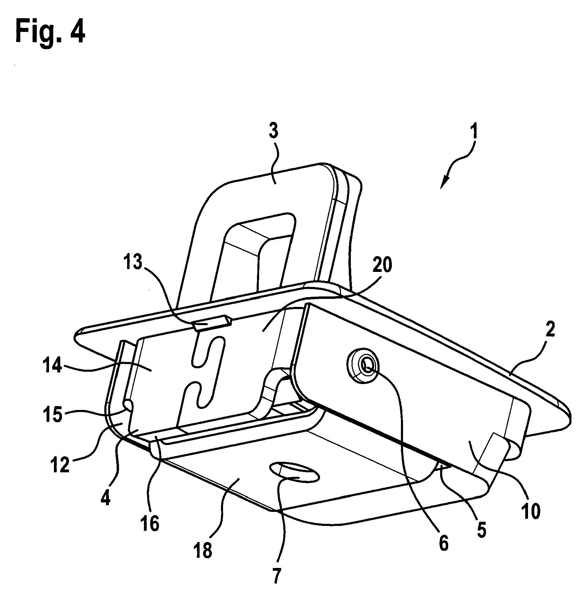

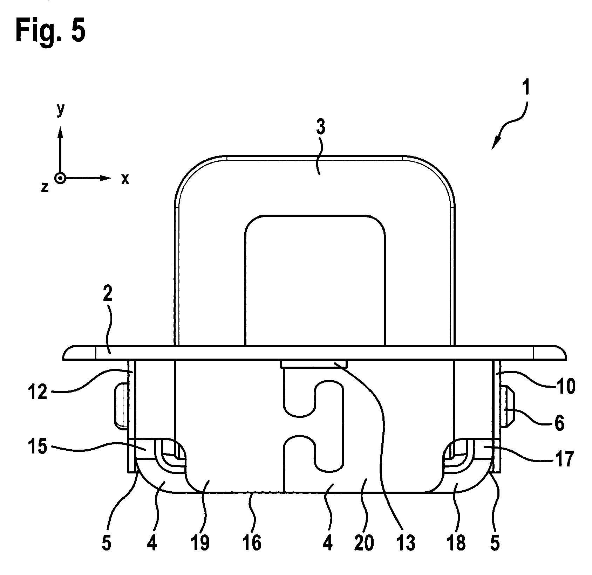

Wie beispielsweise in der Figur 4 und der Figur 5 gezeigt ist, weist sowohl der Sockel 2 als auch das Verstärkungselement 4 jeweils zwei Öffnungen auf, die fluchtend zueinander angeordnet sind. Durch diese Öffnungen führt ein Welle 6, welche mit dem Sockel 2 verstemmt ist. Die Welle 6 verbindet daher den Sockel 2 mit dem Verstärkungselement 4 und sichert das Verstärkungselement 4 gegen ein Herausfallen aus dem Sockel 2 zusätzlich ab. Die Welle 6 dient zur schwenkbaren Lagerung der Öse 3, welche in der Figur 4 im aufgeklappten Zustand zu erkennen ist. Durch diese Öse 3 könnte beispielsweise ein Haken oder ein Seil durchgeführt und befestigt bzw. verzurrt werden. Um den Halter 1 mit einer beliebigen Oberfläche, beispielsweise mit einem Kofferraumboden oder einem Fahrzeugsitz des Kraftfahrzeugs, zu verbinden, weisen sowohl das Verstärkungselement 4 als auch der Sockel 2 jeweils eine Durchgangsöffnung 7 bzw. 8 auf, durch welche ein Befestigungselement, wie beispielsweise eine Schraube aufgenommen werden kann. Die Durchgangsöffnung 7 und die Durchgangsöffnung 8 sind fluchtend zueinander angeordnet sind, um eine einfache Befestigung des Halters 1 zu gewährleisten. Der Halter könnte dabei mittels einer Schrauben-Mutter-Verbindung mit der beliebigen Oberfläche verbunden werden.

Der aus Kunststoff oder alternativ aus Metall ausgebildete kastenförmige Sockel 2 umfasst einen Kragen 9, der in einem Winkel von etwa 90° an Seitenwände 10, 11, 12, 13 des Sockels 2 angeformt ist, und eine Bodenwand 14 aufweisend die Durchgangsöffnung 8. Die im Vergleich zu den anderen Seitenwänden 10, 11 , 12 relativ klein ausgeführte Seitenwand 13 ist als Rastnase ausgebildet, die mit einer nicht näher gezeigten Rastaufnahme des Verstärkungselements 4 eine formschlüssige Rastverbindung bildet. Der Sockel 2 dient, wie bereits oben beschrieben, zur Aufnahme des teilkastenförmigen Verstärkungselements 4, welches drei Seitenwände 15, 16, 17 und eine Bodenwand 18 umfasst.

Das Verstärkungselement 4 wir durch einen Metallfumormprozess, insbesondere durch einen Biegeprozess hergestellt. Im Anfangszustand handelt es sich um ein aus Metall ausgebildetes Blech mit einem ersten Ende 19 und einem zweiten Ende 20. Dieses Blech wird an den gewünschten Stellen mittels der Stanztechnik weiter bearbeitet, um beispielsweise die Durchgangsöffnung 7 herzustellen. Beim Biegeprozess wird das Verstärkungselement 4 derart gebogen, dass eine Überlappung der Enden 19, 20 des Blechs ausgeschlossen wird. Dies führt dazu, dass das kastenförmige Verstärkungselement 4 in seinem geformten Endzustand, bei welchem zumindest der Biegeprozess des Verstärkungselements 4 beendet worden ist, eine einlagige Bodenwand 18 sowie einlagige Seitenwände 15, 16, 17 aufweist. Die Bildung einer doppelwandigen Seitenwand des Verstärkungselements 4 wird dadurch vorteilhaft vermieden, so dass die Bauhöhe des Halters 1, folglich auch das Gewicht des Halters 1 und somit auch die Materialkosten des Verstärkungselements 4 des Halters 1 in vorteilhafterweise reduziert werden. Die Wandstärke des Verstärkungselements 4 beträgt daher 3mm - 5mm und ist im Wesentlichen konstant für die Seitenwände 15, 16, 17 und die Bodenwand 18. Um die Stabilität und Festigkeit des Verstärkungselements 4 weiter zu verbessern, wird die Seitenwand 16 durch die Enden 19, 20 gebildet. Dabei werden die komplementär zueinander ausgeführten Enden 19, 20 formschlüssig, alternativ auch kraft- oder stoffschlüssig, mittels einer T-förmigen Verzahnung an ihren Verbindungsabschnitten verbunden. Die T-förmigen Verzahnung nimmt vor allem die Kräfte in x-Richtung und y-Richtung auf. Dies ist sehr vorteilhaft, weil in der Regel die größten Belastungen und Kräfte aus diesen Richtungen auf den Halter 1, insbesondere auf die Seitenwand 16 des Verstärkungselements 4 wirken. Zusätzlich wird in z-Richtung die Seitenwand 16 noch von der am Sockel 2 angeordneten als Seitenwand 13 ausgebildeten Rastnase gehalten, welche zum Verrasten des Verstärkungselements 4 mit dem Sockel 2 dient. Dazu kann zusätzlich eine Rastaufnahme in der T-förmige Seitenwand angeordnet sein, um die Rastnase des Sockels aufzunehmen. Die Rastnase könnte aber genauso gut mittels einer Klemmverbindung an der Seitenwand 16, welche durch die Enden 19,20 gebildet wird, kraftschlüssig anliegen. Durch die Rastverbindung bzw. Klemmverbindung wird die Stabilität der Seitenwand 16 aufweisend die T-förmigen Verzahnung weiter verbessert, da auch in z-Richtung wirkende Kräfte aufgenommen werden können. Selbstverständlich könnte auch das Verstärkungselement 4 eine Rastnase aufweisen, welche mit einer am Sockel 2 angeordneten dazugehörigen Rastaufnahme verbunden werden kann.

Gemäß dieser ersten Ausführungsform reicht es aus, wenn der Halter 1 zur seiner Befestigung lediglich eine Durchgangsöffnung 7,8 aufweist. Selbstverständlich könnten auch zwei oder mehrere Durchgangsöffnungen 7,8 am Verstärkungselement 4 bzw. am Sockel 2 vorgesehen sein, um den Halter 1 an einer Oberfläche zu befestigen.

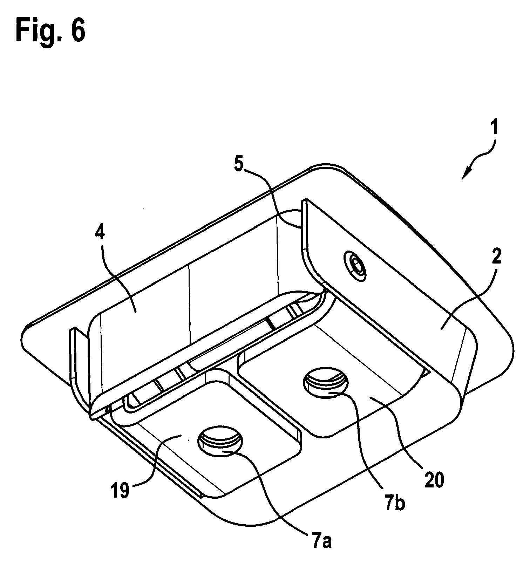

In der Figur 6 ist eine zweite Ausführungsform des erfindungsgemäßen Halters 1 dargestellt, wobei der Wesentliche Aufbau und die Funktionen des Sockels 2, der Öse 3 und des Verstärkungselements 4 denen des ersten Ausführungsbeispiels, visualisiert in den Figuren 1 bis 5, ähneln. Im Unterschied zum ersten Ausführungsbeispiel ist der Halter 1 mit einem Verstärkungselement 4 versehen, welches zwei offene Enden 19, 20 aufweist. Die geformten, insbesondere gebogenen Enden 19, 20 bilden dabei die Bodenwand 18 des Verstärkungselements 4 und weisen zwei Durchgangsöffnungen 7a, 7b auf. Da die beiden offenen Enden 19, 20 die Bodenwand 18 bilden und bei einer Belastung des Halters 1 hohe Zugkräfte auf die Bodenwand 18 wirken, werden zur sicheren und stabilen Befestigung des Halters 1 an einer Oberfläche die zwei Durchgangsöffnung 7a, 7b benötigt, die jeweils zur Aufnahme mindestens eines Befestigungselements dienen. Die Seitenwände 15, 16, 17 sowie die Badenwand 18 weisen eine im Wesentlichen konstante Wandstärke von 3mm bis 5mm auf. Im Vergleich zum ersten Ausführungsbeispiel kann bei dem Verstärkungselement 4 noch mehr Material eingespart werden, da die beiden Enden 19, 20 berührungslos zueinander bleiben können. Theoretisch wäre es natürlich auch möglich die beiden Enden 19,20 mit einer Verzahnung gemäß dem ersten Ausführungsbeispiel zu verbinden, wenn eine größere Stabilität des Halters 1 erforderlich ist.

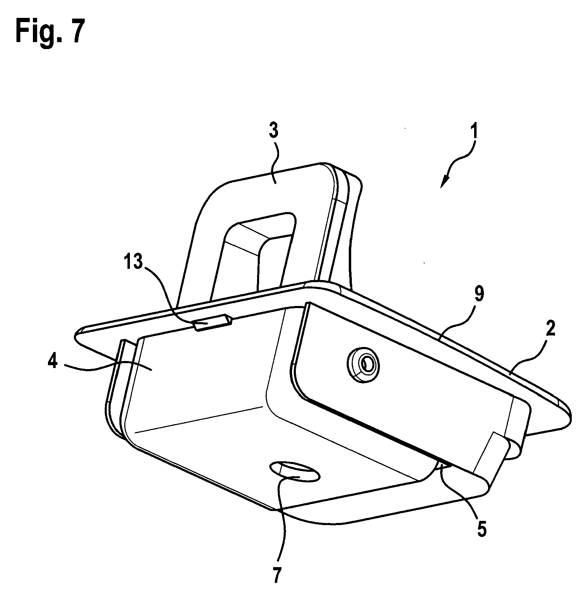

In der Figur 7 ist eine dritte Ausführungsform des erfindungsgemäßen Halters 1 visualisiert, welcher ebenfalls den zuvor beschriebenen Ausführungsformen ähnelt. Dabei ist das Verstärkungselement 4 mittels des Tiefziehformens geformt. So lässt sich auf einfache Art und Weise sehr kostengünstig ein stabiler als Verstärkungselement 4 einteiliger Hohlkörper aufweisend mindestens drei Seitenwände 15, 16, 17 und eine Bodenwand 18 herstellen. Da es sich bei dem im Tiefziehprozess hergestellten Verstärkungselement 4 um einen einteiligen in sich geschlossenen Hohlkörper handelt, weist das Verstärkungselement 4 keine offenen Enden auf, wie dies beispielsweise in dem ersten oder zweiten Ausführungsbeispiel der Fall ist. Es kann somit in vorteilhafterweise auf ein nachträgliches kraftschlüssiges und/oder formschlüssiges Verbinden von Wandungen des Verstärkungselements 4 verzichtet werden. Folglich sind auch Trennnähte zwischen zwei Wandungen, insbesondere von zwei Enden der Wandungen, ausgeschlossen.

Die Stabilität und Festigkeit des Verstärkungselements 4 wird daher vorteilhaft verbessert. Nach dem Tiefziehformen kann das Verstärkungselement 4 weiter bearbeitet werden, so dass unter anderem das Verstärkungselement 4 mit der Durchgangsöffnung 7 versehen wird, welche zur Befestigung des Halters 1 dient. Die Durchgangsöffnung 7 kann beispielsweise mit Hilfe der Stanztechnik gebildet werden. Es reicht in diesem Fall in der Regel aus, das Verstärkungselement 4 mit einer einziger Durchgangsöffnung 7 zu versehen, weil der einteilig als Verstärkungselement 4 ausgebildete Formkörper eine genügend hohe Festigkeit aufweist. Selbstverständlich können auch mehrere Durchgangsöffnungen 7 oder weitere Ausnehmungen an beliebigen Wandungen des Verstärkungselements 4 angeordnet werden, falls die Umstände dies erfordern.

Alternativ könnte der als Verstärkungselement 4 ausgebildete einteilige Hohlkörper auch im Gussverfahren hergestellt werden.

### Bezugszeichenliste

- 1: Halter
- 2: Sockel
- 3: Öse
- 4: Verstärkungselement
- 5: Aufnahme
- 6: Welle
- 7: Durchgangsöffnung des Verstärkungselements 4
- 7a: erste Durchgangsöffnung des Verstärkungselements 4
- 7b: zweite Durchgangsöffnung des Verstärkungselements 4
- 8: Durchgangsöffnung des Sockels 2
- 9: Kragen
- 10: Seitenwand des Sockels 2
- 11: Seitenwand des Sockels 2
- 12: Seitenwand des Sockels 2
- 13: Seitenwand des Sockels 2
- 14: Bodenwand des Sockels 2
- 15: Seitenwand des Verstärkungselements 4
- 16: Seitenwand des Verstärkungselements 4
- 17: Seitenwand des Verstärkungselements 4
- 18: Bodenwand des Verstärkungselements 4
- 19: erstes Ende
- 20: zweites Ende

## Patentansprüche

1. Halter (1), insbesondere zum Verzurren von Gepäckteilen oder Kindersitzen im Kraftfahrzeug, zumindest umfassend
- einen Sockel (2),
- eine Öse (3) und
- ein aus einem formbaren, insbesondere biegbaren, Material ausgebildetes Verstärkungselement (4),
wobei das Verstärkungselement (4) an dem Sockel (2) angeordnet ist und die Öse (3) beweglich an dem Sockel (2) und/oder an dem Verstärkungselement (4) gelagert ist,
wobei das Verstärkungselement (4) im geformten Endzustand einlagig ausgebildet ist,
wobei das geformte Verstärkungselement (4) zwei Enden aufweist, welche miteinander formschlüssig verbunden sind
**dadurch gekennzeichnet, dass**
die beiden Enden (19, 20) mittels einer Verzahnung, insbesondere T-förmigen Verzahnung, formschlüssig miteinander verbunden sind.

2. Halter (1) nach Anspruch 1, **dadurch gekennzeichnet, dass** die zwei miteinander zu verbindenden Enden (19, 20) an ihren Verbindungsabschnitten komplementär zueinander ausgebildet sind.

3. Halter (1) nach Anspruch 1 oder 2, **dadurch gekennzeichnet, dass** die Wandstärke des Verstärkungselements (4) mindestens 3mm und höchstens 5mm aufweist.

4. Halter (1) nach einem der Ansprüche 1 bis 3, **dadurch gekennzeichnet, dass** die Wandstärke des Verstärkungselements (4) im geformten Endzustand im Wesentlichen konstant ist.

5. Halter (1) nach einem der Ansprüche 1 bis 4, **dadurch gekennzeichnet, dass** eine Bodenwand (18) oder eine Seitenwand (15, 16, 17) des Verstärkungselements (4) und/oder eine Bodenwand (14) oder eine Seitenwand (10, 11, 12, 13) des Sockels (2) jeweils mindestens eine Durchgangsöffnung (7, 7a, 7b, 8), vorzugsweise zwei Durchgangsöffnungen (7, 7a, 7b, 8), aufweisen, welche zum Befestigen des Halters (1) an einer Oberfläche dient, wobei die Durchgangsöffnung (8) des Sockels (2) und die Durchgangsöffnung (7, 7a, 7b) des Verstärkungselements (4) fluchtend zueinander angeordnet sind.

6. Halter (1) nach einem der Ansprüche 1 bis 5, **dadurch gekennzeichnet, dass** das Verstärkungselement (4) teilkastenförmig ausgebildet ist und die Seitenwand (15, 16, 17) des Verstärkungselements (4) zumindest teilweise durch die beiden Enden (19, 20) des Verstärkungselements (4) im geformten Endzustand ausgebildet ist.

7. Halter (1) nach einem der Ansprüche 1 bis 6, **dadurch gekennzeichnet, dass** das Verstärkungselements (4) teilkastenförmig ausgebildet ist und die Bodenwand (18) des Verstärkungselements (4) zumindest teilweise durch die beiden Enden (19, 20) des Verstärkungselements (4) im geformten Endzustand ausgebildet ist.

8. Halter (1) nach Anspruch 7, **dadurch gekennzeichnet, dass** die beiden die Bodenwand (18) bildenden Enden (19, 20) des Verstärkungselements (4) jeweils eine Durchgangsöffnung (7a, 7b) zur Aufnahme von Befestigungselementen aufweisen.

9. Halter (1) nach einem der Ansprüche 1 bis 8, **dadurch gekennzeichnet, dass** der der Sockel (2) aus Kunststoff ausgebildet ist und das Verstärkungselement (4) aus Metall ausgebildet ist.

## Claims

1. A holder (1), in particular for securing items of luggage or child seats in motor vehicles, at least comprising
- a base (2),
- a lug (3) and
- a reinforcement element (4) formed from a mouldable, in particular flexible, material,
the reinforcement element (4) being arranged on the base (2) and the lug (3) being mounted movably on the base (2) and/or on the reinforcement element (4),
the reinforcement element (4) being single-layered in its moulded final state,
the moulded reinforcement element (4) having two ends, which are connected to each other in a form-fitting manner,
**characterised in that**
the two ends (19, 20) are connected to each other in a form-fitting manner by means of a toothed system, in particular a T-shaped tooth system.

2. The holder (1) according to Claim 1, **characterised in that** the two ends (19, 20) that are to be connected to each other complement each other at the connecting sections thereof.

3. The holder (1) according to Claim 1 or 2, **characterised in that** the wall thickness of the reinforcement element (4) is at least 3 mm and no more than 5 mm.

4. The holder (1) according to any one of Claims 1 to 3, **characterised in that** the wall thickness of the reinforcement element (4) is substantially constant in its moulded final state.

5. The holder (1) according to any one of Claims 1 to 4, **characterised in that** a bottom wall (18) or a side wall (15, 16, 17) of the reinforcement element (4) and/or a bottom wall (14) or a side wall (10, 11, 12, 13) of the base (2) each have at least one through-opening (7, 7a, 7b, 8), preferably two through-openings (7, 7a, 7b, 8), which serve to fasten the holder (1) to a surface, wherein the through-opening (8) of the base (2) and the through-opening (7, 7a, 7b) of the reinforcement element (4) are arranged in alignment with each other.

6. The holder (1) according to any one of Claims 1 to 5, **characterised in that** the reinforcement element (4) has a partial box shape and the side wall (15, 16, 17) of the reinforcement element (4) is formed at least partially by the two ends (19, 20) of the reinforcement element (4) in its moulded final state.

7. The holder (1) according to any one of Claims 1 to 6, **characterised in that** the reinforcement element (4) has a partial box shape and the bottom wall (18) of the reinforcement element (4) is formed at least partially by the two ends (19, 20) of the reinforcement element (4) in its moulded final state.

8. The holder (1) according to Claim 7, **characterised in that** the two ends (19, 20) of the reinforcement element (4) that form the bottom wall (18) each have a through-opening (7a, 7b) for receiving fastening elements.

9. The holder (1) according to any one of Claims 1 to 8, **characterised in that** the base (2) is formed from plastic and the reinforcement element (4) is formed from metal.

## Revendications

1. Support (1), notamment pour amarrer des éléments de bagages ou des sièges pour enfants dans un véhicule automobile, comprenant en outre :
- un socle (2),
- un sillet (3) et
- un élément de renforcement constitué d'un matériau déformable, notamment flexible (4),
dans lequel l'élément de renforcement (4) est disposé sur le socle (2) et l'oeillet (3) est positionnée de manière mobile sur le socle (2) et/ou sur l'élément de renforcement (4),
dans lequel l'élément de renforcement (4) est configuré en une couche en l'état final façonné,
dans lequel l'élément de renforcement façonné (4) présente deux extrémités, qui sont reliées l'une à l'autre par complémentarité de forme,
**caractérisé en ce que**
les deux extrémités (19, 20) sont reliés l'un à l'autre par complémentarité de forme au moyen d'une denture, notamment au moyen d'une denture en forme de T.

2. Support (1) selon la revendication 1, **caractérisé en ce que** les deux extrémités à relier l'une à l'autre (19, 20) sont configurées de manière complémentaires l'une à l'autre sur leurs portions de liaison.

3. Support (1) selon la revendication 1 ou 2, **caractérisé en ce que** l'épaisseur de paroi de l'élément de renforcement (4) présente au moins 3 mm et au maximum 5 mm.

4. Support (1) selon une des revendications 1 à 3, **caractérisé en ce que** l'épaisseur de paroi de l'élément de renforcement (4) en l'état final façonné est essentiellement constante.

5. Support (1) selon une des revendications 1 à 4, **caractérisé en ce que** une paroi de fond (18) ou une paroi latérale (15, 16, 17) de l'élément de renforcement (4) et/ou une paroi de fond (14) ou une paroi latérale (10, 11, 12, 13) du socle (2) présentent respectivement au moins une ouverture traversante (7, 7a, 7b, 8), de préférence deux ouvertures traversantes (7, 7a, 7b, 8), qui servent à fixer le support (1) sur une surface, dans lequel l'ouverture traversante (8) du socle (2) et l'ouverture traversante (7, 7a, 7b) de l'élément de renforcement (4) sont disposés en alignement l'un par rapport à l'autre.

6. Support (1) selon une des revendications 1 à 5, **caractérise en ce que** l'élément de renforcement (4) est configuré en forme de caisson partiel et la paroi latérale (15, 16, 17) de l'élément de renforcement (4) est configuré au moins partiellement par les deux extrémités (19, 20) de l'élément de renforcement (4) en l'état final façonné.

7. Support (1) selon une des revendications 1 à 6, **caractérisée en ce que** l'élément de renforcement (4) est configuré en forme de caisson partiel et la paroi de fond (18) de l'élément de renforcement (4) est configuré au moins partiellement par les deux extrémités (19, 20) de l'élément de renforcement (4) en l'état final façonné.

8. Support (1) selon la revendication 7, **caractérise en ce que** les deux extrémités (19, 20) de l'élément de renforcement (4) formant la paroi de fond (18) présentent respectivement une ouverture traversante (7a, 7b) pour recevoir des éléments de fixation.

9. Support (1) selon une des revendications 1 à 8, **caractérise en ce que** le socle (2) est configuré en plastique et l'élément de renforcement (4) est configuré en métal.
